# FASCICULE DE BREVET EUROPEEN

(11) **EP 0 724 845 B1**
(45) Date de publication et mention de la délivrance du brevet: **04.07.2001**
(21) Numéro de dépôt: 96490006.2
(22) Date de dépôt: 29.01.1996
(51) Int. Cl.: A23L 1/325, A23B 4/06, A23B 4/08

(54) **Préparation de poisson cru surgelé et procédé de fabrication d'une telle préparation**
Rohe, tiefgefrorene Fischzusammensetzung und Verfahren zur Herstellung
Raw frozen fish preparation and process therefor

(30) Priorité: 01.02.1995 FR 9501343
(43) Date de publication de la demande: 07.08.1996
(73) Titulaire: CAP BG, 62250 Marquise (FR)
(72) Inventeur: Desoomer, Jean-Paul, 62126 Pernes les Boulogne (FR); Beirnaert, Pierre-Francois, 62126 Wimille (FR); Germe, Benoît, 62630 Hesdin l'Abbe (FR)
(74) Mandataire: Hennion, Jean-Claude

(56) Documents cités:
- EP-A- 0 328 881
- EP-A- 0 358 791
- EP-A- 0 716 815
- AU-A- 8 942 882
- FR-A- 2 137 873
- FR-A- 2 683 124
- US-A- 5 188 854
- PATENT ABSTRACTS OF JAPAN vol. 015, no. 271 (C-0848), 10 Juillet 1991 & JP-A-03 091440 (TAIYO FISHERY CO LTD), 17 Avril 1991

## Description

La présente invention concerne une préparation de poisson cru, haché, qui se présente à l'état surgelé sous toute forme adéquate et qui a une cohésion suffisante pour être cuit en friture et également à la poêle à l'instar d'un steak haché réalisé à partir de viande de boeuf, ou encore au four, à la vapeur, ou même en sachet sous vide.

En matière de préparation de poisson, on trouve sur le marché deux types principaux à savoir les portions de filet de poisson pané et les croquettes de poisson. Dans ces deux types de préparation, on utilise de la panure, de l'amidon, des féculents ou autres ingrédients.

L'objectif des demandeurs et de rechercher une préparation de poisson qui soit quasiment exclusivement à base de poisson, sans panure ni amidon, ni féculent, ni gélifiant, bien qu'elle puisse comporter des ingrédients destinés à en modifier le goût par exemple des arômes.

On a déjà proposé dans le document FR 2 559 649 une préparation de poisson, du type pâté, qui est exempte de panure , amidon, féculent et gélifiant. Cependant la cohésion de cette préparation est obtenue par thermocoagulation, la dite préparation étant soumise à une stérilisation en autoclave qui en réalise la cuisson.

Le document FR 2 059 337 concerne une préparation de viande reconstituée, qui peut éventuellement être à base de poisson cru. Le but visé dans ce document est de proposer une préparation de viande qui est exempte du tissu conjonctif et qui est composée de 30 à 97,5 % en poids d'une composition de viande moulue dans laquelle la viande a une granulométrie moyenne de moins de 2 mm et apporte au moins 1 % en poids de l'ensemble des protéines de viande du produit et de 2,5 à 70 % en poids d'un constituant conférant la texture et consistant en faisceaux de fibre musculaire de viande séparés dont chacun a une longueur de 2 à 50 mm et un diamètre de 0,5 à 2 mm, les faisceaux de fibre musculaire étant en substance parallèles entre eux pour au moins 70 % et se trouvant intimement dispersés dans la composition de viande moulue à laquelle ils adhèrent. Ainsi la viande reconstituée décrite dans ce document antérieur est plus tendre qu'une viande normale, le tissu conjonctif ayant été éliminé tout en présentant sensiblement la même texture qu'une viande normale. Il s'agit bien d'une viande reconstituée.

Dans ce document FR 2 059 337, il est indiqué que par viande on peut entendre la chair non seulement des mammifères mais aussi de la volaille, du poisson et des coquillages. Dans l'exemple illustrant la préparation à base de poisson, il est prévu de faire passer des morceaux de filet de morue à travers une plaque percée de trous d'un diamètre de 1,5 mm de manière à obtenir une chair de poisson finement divisée et qui contient des faisceaux de fibre musculaire séparés. Ce poisson ainsi divisé est mélangé avec un polyphosphate et de l'eau pour obtenir une pâte qui est ensuite extrudée afin de réaliser l'alignement préférentiel des faisceaux de fibre musculaire. Le ruban de poisson extrudé est découpé en morceaux, qui sont congelés, puis enrobés dans de la pâte convenant pour la confection de croquettes, frits légèrement puis recongelées jusqu'au moment de la consommation.

Il est précisé que les croquettes de poisson reconstituées présentent à la consommation une texture et un aspect semblables à ceux réalisés à partir de croquettes de poisson faites de filets entiers.

Le but visé par les demandeurs diffère radicalement de celui du document FR 2 059 337. Il ne s'agit pas de reconstituer la texture et l'aspect d'un filet entier de poisson, mais de proposer une préparation de poisson cru, surgelée exempte d'ingrédients du type panure, amidon, féculent ou gélifiant, qui se présente sous toute forme adaptée et qui ait une cohésion suffisante pour être cuite à la poêle comme un steak haché ou encore en friture, ou encore au four, à la vapeur ou sous vide. Selon la Direction Générale de la concurrence, de la consommation et de la répression des fraudes, le terme "steak" n'étant pas réservé à de la viande de boeuf, le but des demandeurs est de proposer par analogie un steak haché de poisson cru et surgelé.

Ce but est parfaitement atteint par la préparation de l'invention. Il s'agit d'une préparation de poisson cru surgelé, exempte de gélifiant , amidon , polyphosphate ou substance autre que du sel ou des matières protéiques ou encore autre que des ingrédients aptes à modifier le moelleux et le goût. De manière caractéristique cette préparation se compose de 90 à 75 % de morceaux grossiers de poisson, incluant le tissu conjonctif, et de 10 à 25 % d'une pâte de poisson, enrobant les morceaux grossiers, ladite pâte consistant en du poisson broyé et haché menu apte à former un liant, totalement exempt de gélifiant ; de plus la préparation selon l'invention renferme sensiblement toute l'eau de constitution à la fois des morceaux et de la pâte de poisson.

D'une part la structure des morceaux les plus gros diffère de ceux décrits dans le document FR 2 059 337 dans la mesure où il s'agit non pas de faisceaux de fibre musculaire séparés mais de morceaux grossiers incluant le tissu conjonctif. D'autre part les proportions entre la pâte et les morceaux diffèrent également très sensiblement, puisque les demandeurs ont pu vérifier que compte-tenu de la structure des morceaux grossiers de poisson, la proportion de 10 à 25 % de pâte était la proportion optimale : une proportion inférieure à 10 % n'assurerait pas la cohésion suffisante, tandis qu'une proportion supérieure à 25 % donnerait à la préparation un caractère collant en bouche trop marqué.

De plus le fait que la préparation renferme sensiblement toute l'eau de constitution à la fois des morceaux et de la pâte de poisson et le tissu conjonctif correspondant permet de conserver toutes les propriétés gustatives et d'obtenir une préparation qui ait une tenue à la cuisson similaire au poisson.

Les morceaux grossiers de la préparation ont des dimensions qui sont comprises entre 2 et 10 mm.

La préparation de poisson qui est décrite dans le document JP-A- 03 091440 contient des polyphosphates et utilise comme liant du surimi qui est une chair de poisson hachée, pressée et rincée, totalement destructurée, et donc exempte de l'eau de constitution et du tissu conjonctif correspondant. De plus les morceaux ont une taille importante, de l'ordre de 3 à 10 cm. Cette préparation n'a donc pas la composition et la structure de celle de l'invention.

De préférence les morceaux grossiers de poisson sont réalisés à partir de filets tandis que la pâte de poisson est réalisée à partir de chair hachée de poisson. Le filet est la partie noble du poisson, la chair hachée provient des chutes et des rejets obtenus lors de l'extraction des filets. Cette chair hachée a perdu la texture fibreuse de la chair de poisson, mais cela n'a pas de conséquence pour la réalisation de la pâte, selon l'invention, puisque ce sont les protéines contenues dans la chair hachée qui sont avant tout recherchées pour assurer le liaison des morceaux de poisson.

Avantageusement le poisson dans lequel sont réalisés les morceaux grossiers et la pâte est du poisson blanc c'est-à-dire du poisson à chair blanche, par exemple du colin d'Alaska, du merlu, du cabillaud, ou du brosme. Ce type de poisson est préféré, non seulement au regard de son prix mais également des caractéristiques de sa chair qui convient parfaitement à la préparation de l'invention, d'autres poissons comme le saumon ou la truite ayant une chair plus grasse.

Il est possible de faire varier le goût de la préparation de l'invention, en utilisant comme matière première, différents types de poissons, par exemple en utilisant majoritairement des poissons à chair blanche et dans une plus faible proportion du saumon, des coquillages et/ou des crustacés.

Il est également possible d'ajouter une très faible proportion par exemple de 0,1 à 1 % en poids d'ingrédients du type arôme ou assaisonnement destinés à modifier le goût de la préparation, ou encore de 1 à 10 % en poids d'ingrédients du type huile ou corps gras destiné à en modifier le moelleux.

C'est un autre objet de l'invention que de proposer un procédé de fabrication spécialement conçu pour la réalisation de la préparation de poisson cru et surgelé précitée.

De manière caractéristique, le procédé consiste à utiliser comme matière première des blocs de chair de poisson congelée ou surgelée et à procéder aux étapes suivantes :
a) décongélation partielle de la chair de poisson pour atteindre une température de - 10°C à - 2°C,
b) hachage fin d'une proportion de 10 à 25 % de la chair ainsi partiellement décongelée avec addition éventuelle d'une petite quantité de sel et/ou de matières protéiques, jusqu'à obtention d'une pâte fine et collante au toucher,
c) hachage grossier du complément de chair de poisson partiellement décongélée, jusqu'à obtention de morceaux grossiers,
d) incorporation des morceaux grossiers à la pâte jusqu'à obtention d'un mélange homogène,
e) moulage du mélange homogène et surgélation.

Le fait de travailler à une température de l'ordre de - 10° C à - 2°C présente bon nombre d'avantages. Un premier avantage réside dans l'économie d'énergie pour la décongélation des blocs de départ et la surgélation après moulage. Un deuxième avantage réside dans le fait qu'à cette température notament entre - 5 et - 2 °C, le hachage est possible dans de bonnes conditions et que lors de ce hachage qu'il soit fin ou grossier, il n'y a pas de perte d'exsudat. En fait dans tous les procédés de hachage ou de broyage qui mettent en oeuvre une chair de poisson décongélée à la température ambiante notamment, il se produit inévitablement une élimination partielle de l'eau de constitution de la chair de poisson, par exsudation. La perte de cet exsudat altère les qualités gustatives et la valeur nutritive de la chair de poisson. Dans la fourchette de température de -10°C à - 2 °C, la chair de poisson se trouve dans un état pâteux, semi décongelée, dans laquelle l'eau ne coule pas, restant à l'état cristallisé.

De préférence la chair de poisson qui est destinée à la fabrication de la pâte de poisson est à base de chair hachée pour 10 à 25 %, tandis que la chair de poisson qui est destinée à former les morceaux grossiers est à base de filet pour 50 à 80 % et à base de chair hachée pour 10 à 25 %.

Dans ce cas les étapes de hachage et d'incorporation (étapes b, c et d) peuvent être réalisées dans'une même installation à effet de cutterage, dont les paramètres de fonctionnement sont réglés en vue d'obtenir le résultat désiré pour chaque étape. En particulier l'étape d'incorporation des morceaux grossiers jusqu'à obtention d'un mélange homogène peut se décomposer en deux étapes : la première étape consiste à mélanger la chair hachée qui est constituée naturellement de morceaux grossiers, à la pâte de poisson jusqu'à homogénéisation. La seconde étape consiste à ajouter les filets et à hacher de manière à obtenir d'une part la formation des morceaux grossiers à base de filet et d'autre part le mélange homogène dans la pâte de l'ensemble des morceaux grossiers provenant de la chair hachée et des filets.

Dans une version particulière du procédé de l'invention, le moulage est réalisé en poussant le mélange homogène dans un boyau de sorte que la préparation surgelée incluse dans son boyau peut être découpée en portion.

Selon une autre variante de réalisation, on utilise comme matière première, outre les blocs de chair de poisson congelée ou surgelée, de la chair de poisson frais ; dans ce cas au cours de l'un et/ou l'autre des opérations où la chair de poisson frais est mise en oeuvre, à savoir hachage fin, hachage grossier et incorporation, on maintient la température dans une fourchette comprise entre - 10° C et - 2 °C, notamment en ajoutant de la neige carbonique. On évite ainsi une remontée de la température qui serait préjudiciable.

La présente invention sera mieux comprise à la lecture de la description qui va être faite d'exemples de réalisation d'une préparation de poisson cru surgelé et haché.

Dans un exemple précis, la matière première est du poisson blanc qui se présente sous la forme de blocs surgelés, les uns étant des blocs de filet de poisson et les autres de chair hachée de poisson.

Le poisson blanc ou poisson à chair blanche est par exemple du colin d'Alaska, du merlu, du cabillaud ou du brosme.

Classiquement les blocs de filet ou les blocs de chair hachée sont stockés en chambre frigorifique à des températures comprises entre - 30 °C et - 25 °C.

La préparation selon l'invention est réalisée dans une machine à effet de cutterage, dans laquelle des couteaux horizontaux ou de préférence verticaux sont entraînés en rotation à des vitesses qui peuvent varier dans de grandes proportions, par exemple de 1 500 à 3 000 tours/mn, et parfois même jusqu'à 8 000 tours/mm. Une telle machine est apte à réaliser soit un hachage fin soit un hachage grossier, soit uniquement un mélange, selon le temps, la vitesse et le sens de rotation. Par hachage grossier, on entend un hachage qui permet d'obtenir des morceaux grossiers dont les dimensions sont comprises entre 2 et 10 mm.

Dans un premier temps on décongèle partiellement jusqu'à une température variant de - 5 °C à - 2 °C à coeur les blocs surgelés de filet et les blocs surgelés de chair hachée.

On introduit dans la machine des blocs partiellement décongelés à base de chair hachée dans une proportion de 10 à 25 % en poids de la préparation finale et on fait fonctionner la machine jusqu'à obtention d'une pâte fine et collante au toucher. Les conditions de fonctionnement de la machine correspondent à un hachage fin.

La forme pâteuse du mélange homogène obtenu est due à une solubilisation partielle des protéines naturelles de la chair de poisson, provoquée par la présence de sel dans ladite chair.

Si besoin, en fonction du type de poisson, il est préférable d'ajouter lors de ce hachage fin une certaine quantité de sel, par exemple à obtenir de 0,4 à 0,6 % en sel par rapport à la préparation finale. On peut éventuellement ajouter au lieu et place du sel des matières protéiques, notamment végétales, permettant d'atteindre cette forme pâteuse par solubilisation des protéines naturelles de la chair de poisson sans en altérer le goût.

Bien sûr il serait possible de réaliser cette pâte à partir des blocs partiellement décongelés de filet, mais cela augmenterait très sensiblement le coût dans la mesure où le filet est beaucoup plus cher que la chair hachée qui est en quelque sorte un résidu de fabrication du filet. L'utilisation du filet à ce stade ne présenterait aucun avantage particulier puisque ce qui est recherché n'est pas la structure grossière de la chair mais les protéines naturelles de la chair de poisson, qui sont à l'identique à la fois dans la chair hachée et dans le filet.

Dans un exemple précis de réalisation, la proportion de pâte était de 15 % environ par rapport au poids de la préparation finale.

Selon les demandeurs, une proportion inférieure à 10 % ne permettrait pas une bonne cohésion de la préparation finale, tandis qu'une proportion supérieure à 25 % serait certes techniquement réalisable mais donnerait à la préparation un caractère collant en bouche.

Une fois cette pâte fine et collante obtenue, on ajoute dans la machine à effet de cutterage avec ladite pâte, une quantité complémentaire de chair hachée partiellement décongelée, à la température de - 5°C à - 2°C, par exemple dans une proportion de 15 à 30 % en poids par rapport à la préparation finale. On fait fonctionner la machine durant quelques tours pour obtenir un effet rapide d'homogénéisation. Ceci a pour but de mélanger et de bien homogénéiser les morceaux grossiers provenant des blocs partiellement décongelés à base de chair hachée et les particules fines de la pâte collante, les particules fines devant entourer les morceaux grossiers en sorte de les agglomérer les uns aux autres.

A ce stade de confection de la pâte, on peut ajouter des ingrédients qui auront pour but de modifier le moelleux, notamment de l'huile ou un autre corps gras, ou de modifier le goût final, notamment arôme ou assaisonnement.

On introduit ensuite dans la machine le complément de blocs partiellement décongélés à base de filet et l'on fait fonctionner la machine avec un effet plus long de hachage grossier, puis d'homogénéisation. La proportion de filet est par exemple de 70 à 55 % en poids par rapport à la préparation finale.

Les proportions chair hachée/ filet qui sont donnés à titre d'exemple ont bien sûr une influence sur le rapport qualité/prix de la préparation. La qualité est directement proportionnelle à la quantité de filet tandis que le prix est directement proportionnel à la quantité de chair hachée. Il convient donc de trouver le meilleur compromis possible entre la bonne tenue de la préparation finale à la cuisson, la tenue en bouche et le prix de revient.

Le mélange homogène qui est extrait de la machine est ensuite, après éventuellement un stockage intermédiaire, repris par une formeuse apte à lui donner toute forme souhaitable puis surgelé, directement ou après stockage intermédiaire.

Dans une variante de réalisation, à la sortie de la machine, le mélange homogène est poussé dans une enveloppe, du type boyau, puis surgelé avant d'être débité en portion, éventuellement après stockage.

Il est à noter que tout au long du processus de fabrication, il importe de conserver la température de la chair de poisson, dans l'état où elle se trouve, comprise entre - 10 °C et - 2 °C. Cette condition permet de maintenir l'eau de constitution de la chair de poisson dans un état cristallisé et d'éviter ainsi la perte de cette eau par exsudation. Cette perte serait préjudiciable tant à la qualité gustative qu'à la valeur nutritive de la préparation finale, puisque d'exsudat contient en particulier des protéines naturelles de la chair de poisson. De plus cette température comprise de préférence entre - 5 °C et - 2 °C permet au travail mécanique de hachage de se faire sans difficulté.

L'exemple qui vient d'être décrit est réalisé dans une seule et même machine de cutterage. Cependant il aurait pu être réalisé dans une pluralité de machines, chacune étant adaptée pour obtenir l'effet recherché a chaque étape du procédé. En particulier le hachage grossier pourrait être obtenu dans un broyeur à plaque perforée et le mélange de la pâte et des morceaux grossiers pourrait être obtenu dans un simple mélangeur.

La présente invention n'est pas limitée au mode de réalisation qui vient d'être décrit à titre d'exemple non exhaustif. En particulier afin de varier le goût de la préparation, il serait possible également de remplacer une partie de la chair de poisson blanc par la chair d'autres poissons tels que du saumon, qui a une chair plus grasse, ou encore de la chair de coquillage ou de crustacé.

Par ailleurs, il serait possible d'utiliser comme matière première , en substitution au moins partielle des blocs de chair de poisson congelée ou surgelée, de la chair de poisson frais. Dans ce cas, afin de maintenir la température dans la fourchette de - 10° C à -2 °C, on pourrait notamment ajouter de la neige carbonique pendant les opérations où la chair de poisson frais serait mise en oeuvre.

La préparation de poisson cru surgelé et haché qui fait l'objet de la présente invention et qui est notamment obtenue à l'aide du procédé qui vient d'être décrit, est totalement exempte de gélifiant, d'amidon, de féculent, de polyphosphate ou substance autre que du sel ou des matières protéiques. Il s'agit donc d'une préparation de poisson quasiment pur qui se compose de morceaux grossiers de poisson non calibrés, non orientés et comportant encore le tissu conjonctif, dans une proportion allant de 75 à 90 %, ainsi que d'une pâte de poisson qui consiste en de la chair de poisson broyée et hachée menu , apte à former un liant, cette pâte fine et collante représentant de 10 à 25 % en poids de la préparation totale. Il est à noter que cette préparation renferme sensiblement toute l'eau de constitution et tout le tissu conjonctif du poisson broyé et haché, tant de la pâte que des morceaux grossiers.

Cette préparation peut être, après avoir était conservée au congélateur par l'utilisateur, être préparé exactement comme l'est un steak haché de viande de boeuf. Elle présente aussi la particularité de pouvoir, grâce à sa texture particulière, être cuite en friture, sans risque de désagrégation au cours de la cuisson, ce qui pourrait notamment se produire si les morceaux grossiers avaient des dimensions supérieures.

## Revendications

1. Préparation de poisson cru surgelé, exempte de gélifiant , amidon , féculent, polyphosphate ou substance autre que du sel ou des matières protéiques ou encore autre que des ingrédients aptes à modifier le moelleux ou le goût, caractérisée en ce qu'elle se compose de 90 à 75 % de morceaux grossiers de poisson, incluant le tissu conjonctif, et de 10 à 25 % d'une pâte de poisson, enrobant les morceaux grossiers, ladite pâte consistant en de la chair de poisson broyée et hachée menu apte à former un liant, et en ce qu'elle renferme sensiblement toute l'eau de constitution à la fois des morceaux et de la pâte de poisson.

2. Préparation selon la revendication 1 caractérisée en ce que les morceaux grossiers de poisson ont des dimensions comprises entre 2 et 10 mm.

3. Préparation selon l'une des revendications 1 ou 2 caractérisée en ce que les morceaux grossiers de poisson sont réalisés à partir de filets tandis que la pâte de poisson est réalisée à partir de chair hachée de poisson.

4. Préparation selon l'une des revendications 1 à 3 caractérisée en que le poisson dans lequel sont réalisés les morceaux grossiers et la pâte est du poisson à chair blanche, par exemple du colin d'Alaska, du merlu, du cabillaud, ou du brosme.

5. Préparation selon l'une des revendications 1 à 3 caractérisée en ce que les poissons dans lesquels sont réalisés les morceaux grossiers et la pâte sont des poissons à chair blanche et éventuellement du saumon, de la truite, des coquillages et/ou des crustacés, en quantité inférieure à celle des poissons à chair blanche.

6. Procédé de fabrication de la préparation de poisson cru et congelé de la revendication 1 caractérisé en ce qu'il consiste à utiliser comme matière première des blocs de chair de poisson congelée ou surgelée et à procéder aux étapes suivantes :
a) décongélation partielle de la chair de poisson pour atteindre une température de - 10 °C à - 2 °C, de préférence - 5 °C à - 2 °C,
b) hachage fin d'une proportion de 10 à 25 % de la chair ainsi partiellement décongelée avec addition éventuelle d'une petite quantité de sel et/ou de matières protéiques, jusqu'à obtention d'une pâte fine et collante au toucher,
c) hachage grossier du complément de chair de poisson partiellement décongélée, jusqu'à obtention de morceaux grossiers,
d) incorporation des morceaux grossiers à la pâte jusqu'à obtention d'un mélange homogène,
e) moulage du mélange homogène et surgélation.

7. Procédé selon la revendication 6 caractérisé en ce que l'étape de hachage fin (étape b) est réalisée dans une installation à effet de cutterage, l'étape de hachage grossier (étape c) dans un broyeur à plaque perforée et l'étape d'incorporation (étape d) dans un mélangeur.

8. Procédé selon la revendication 6 caractérisé en ce que la chair de poisson qui est destinée à la fabrication de la pâte de poisson est à base de chair hachée, tandis que la chair de poisson qui est destinée à former les morceaux grossiers est à base de filet pour 50 à 80 % et à base de chair hachée pour 10 à 25 %.

9. Procédé selon la revendication 8 caractérisé en que les étapes de hachage et d'incorporation (étapes b, c et d) sont réalisées dans une même installation à effet de cutterage, dont les paramètres de fonctionnement sont réglés en vue d'obtenir le résultat désiré pour chaque étape, et en ce que l'étape d'incorporation des morceaux grossiers jusqu'à obtention d'un mélange homogène (étape d) se décompose en deux étapes : la première étape consiste à mélanger la chair hachée, qui est constituée naturellement de morceaux grossiers, à la pâte de poisson jusqu'à homogénéisation, et la seconde étape consiste à ajouter les filets et à hacher de manière à obtenir d'une part la formation des morceaux grossiers à base de filet et d'autre part le mélange homogène dans la pâte de l'ensemble des morceaux grossiers provenant de la chair hachée et des filets.

10. Procédé selon l'une des revendications 6 à 9 caractérisé en que , le moulage est réalisé en poussant le mélange homogène dans un boyau de sorte que la préparation recongelée incluse dans son boyau peut être découpée en portion.

11. Procédé selon la revendication 6 caractérisé en ce que l'on utilise comme matière première, outre les blocs de chair de poisson congelée ou surgelée, de la chair de poisson frais et en ce qu'au cours de l'un et/ou l'autre des opérations où la chair de poisson frais est mise en oeuvre, à savoir hachage fin, hachage grossier et incorporation, on maintient la température dans une fourchette comprise entre - 10° C et - 2 °C, notamment en ajoutant de la neige carbonique.

## Claims

1. Raw deep-frozen fish preparation, containing no gelling agent, starch, starch-containing substances, polyphosphate or substances other than salt or proteinic materials or other than ingredients capable of modifying the smoothness and the taste, characterised in that said preparation is composed of 90 to 75% of coarse pieces of fish, containing the connective tissue, and of 10 to 25% of a fish paste, coated around the coarse pieces, which consists of finely ground and minced fish flesh capable of forming a binder, and in that said preparation contains substantially all the constituent water of the pieces as well as of the fish paste.

2. Preparation according to claim 1, characterised in that the coarse pieces of fish have dimensions between 2 and 10 mm.

3. Preparation according to claim 1 or 2, characterised in that the coarse pieces of fish are produced from fillets while the fish paste is produced from minced fish flesh.

4. Preparation according to one of claims 1 to 3, characterised in that the fish from which the coarse pieces and the paste are produced is fish with white flesh, such as hake, Alaska hake, fresh cod, and the like.

5. Preparation according to one of claims 1 to 3, characterised in that the fish from which the coarse pieces and the paste are produced is fish with white flesh, and optionally salmon, trout, and/or shellfish in a lesser proportion than the fish with white flesh.

6. Method for producing the raw deep-frozen fish preparation of claim 1, characterised in that said method consists in using as starting material blocks of frozen or deep-frozen fish flesh and in carrying out the following steps:
a) partial defrosting of the fish flesh in order to reach a temperature of -10°C to -2°C, preferably -5°C to -2°C,
b) finely mincing a proportion of 10 to 25% of the thus partly defrosted flesh, optionally adding a small quantity of salt and/or proteinic substances, until a fine paste is obtained which is sticky to the touch,
c) mincing coarsely the rest of the partly defrosted fish flesh until coarse pieces are obtained,
d) incorporating the coarse pieces to the paste until a homogeneous mixture is obtained,
e) moulding the homogeneous mixture and deep-freezing.

7. Method according to claim 6, characterised in that the fine mincing step (step b) is produced in a chopping/mixing type installation, the coarse mincing step (step c) in an open base grinding mill and the incorporation step (step d) in a mixer.

8. Method according to claim 6, characterised in that the fish flesh which is intended for producing the fish paste is based on minced flesh while the fish flesh which is intended for making up the coarse pieces is based on fillet for 50 to 80% and on minced flesh for 10 to 25%.

9. Method according to claim 8, characterised in that the mincing and incorporating steps (steps b, c and d) are performed in the same chopping/mixing installation of which the operating parameters are so controlled as to obtain the expected result for each step, and in that the steps of incorporating the coarse pieces until a homogeneous mixture is obtained (step d) is divided into two steps: the first step consisting in mixing the minced flesh which is naturally constituted of coarse pieces, with the fish paste until homogenisation, and the second step consisting in adding the fillets and mincing so as to obtain, on the one hand, the formation of coarse pieces based on fillet, and on the other hand, the homogeneous mixture with the paste of all the coarse pieces coming from the minced flesh and the fillets.

10. Method according to one of claims 6 to 9, characterised in that the moulding is performed by pushing the homogeneous mixture into a casing so that the re-frozen preparation contained in its casing can be cut into portions.

11. Method according to claim 6, characterised in that fresh fish flesh is used as starting material besides the blocks of frozen or deep-frozen fish flesh, and in that throughout either one or all the operations in which the fresh fish flesh is used, namely fine mincing, coarse mincing and incorporation, the temperature is kept within a range of -10°C and -2°C, in particular by the addition of dry ice.

## Patentansprüche

1. Zubereitung von rohem, tiefgekühltem Fisch, ohne Geliermittel, Stärkemehl, stärkehaltige Nahrungsmittel, Polyphosphat oder eine andere Substanz außer Salz oder Proteinstoffe, oder auch außer Bestandteilen, die die weiche Beschaffenheit oder den Geschmack verändern können, dadurch gekennzeichnet, daß sie aus 90 bis 75% groben Fischstücken, einschließlich Bindegewebe, und aus 10 bis 25% einer Fischpaste besteht, die die groben Stücke umgibt, wobei die Paste aus zerkleinertem und feingehacktem Fischfleisch besteht, das ein Bindemittel bilden kann, und daß sie im wesentlichen das ganze Wasser einschließt, das sowohl die Fischstücke als auch die Fischpaste enthalten.

2. Zubereitung nach Anspruch 1, dadurch gekennzeichnet, daß die groben Fischstücke Abmessungen zwischen 2 und 10 mm haben.

3. Zubereitung nach einem der Ansprüche 1 oder 2, dadurch gekennzeichnet, daß die groben Fischstücke ausgehend von Filets hergestellt werden, während die Fischpaste ausgehend von gehacktem Fischfleisch hergestellt wird.

4. Zubereitung nach einem der Ansprüche 1 bis 3, dadurch gekennzeichnet, daß der Fisch, aus dem die groben Stücke und die Paste hergestellt werden, ein Fisch mit weißem Fleisch ist, zum Beispiel Alaska-Seehecht, Merlan, Kabeljau oder Dorsch.

5. Zubereitung nach einem der Ansprüche 1 bis 3, dadurch gekennzeichnet, daß die Fische, aus denen die groben Stücke und die Paste hergestellt werden, Fische mit weißem Fleisch und ggf. Lachs, Forelle, Muscheln und/oder Krustentiere in geringerer Menge als die Fische mit weißem Fleisch sind.

6. Herstellungsverfahren für die Zubereitung aus rohem und gefrorenem Fisch des Anspruchs 1, dadurch gekennzeichnet, daß es darin besteht, als Rohstoff Blöcke von gefrorenem oder tiefgekühltem Fischfleisch zu verwenden und die folgenden Schritte durchzuführen:
a) teilweises Auftauen des Fischfleischs, um eine Temperatur von -10°C bis -2°C, vorzugsweise -5°C bis -2°C zu erreichen,
h) Feinhacken eines Anteils von 10 bis 25% des so teilweise aufgetauten Fleischs, möglicherweise mit Zusatz einer kleinen Menge von Salz und/oder Proteinstoffen, bis zum Erhalt einer feinen und beim Anfassen klebenden Masse,
c) Grobhacken der Zugabe von teilweise aufgetautem Fischfleisch, bis zum Erhalt von groben Stücken,
d) Einarbeiten der groben Stücke in die Paste bis zum Erhalt einer homogenen Mischung,
e) Formen der homogenen Mischung und Tiefgefrieren.

7. Verfahren nach Anspruch 6, dadurch gekennzeichnet, daß der Schritt des Feinhackens (Schritt b) in einer Einrichtung mit Cutter-Effekt, der Schritt des Grobhackens (Schritt c) in einem Zerkleinerer mit Lochplatte und der Schritt des Einarbeitens (Schritt d) in einem Mischer erfolgt.

8. Verfahren nach Anspruch 6, dadurch gekennzeichnet, daß das Fischfleisch, das zur Herstellung der Fischpaste bestimmt ist, auf der Basis von gehacktem Fischfleisch ist, während das Fischfleisch, das zur Bildung der groben Stücke bestimmt ist, zu 50 bis 80 % aus Fischfilet und zu 10 bis 25 % aus gehackten Fischfleisch besteht.

9. Verfahren nach Anspruch 8, dadurch gekennzeichnet, daß die Schritte des Hakkens und des Einarbeitens (Schritte b, c und d) in einer einzigen Anlage mit Cutter-Effekt durchgeführt werden, deren Betriebsparameter eingestellt sind, um das für jeden Schritt gewünschte Ergebnis zu erhalten, und daß der Schritt des Einarbeitens der groben Stücke bis zum Erhalt einer homogenen Mischung (Schritt d) in zwei Schritte aufgeteilt ist: der erste Schritt besteht darin, das gehackte Fleisch, das natürlich aus groben Stücken besteht, mit der Fischpaste bis zur Homogenisierung zu vermischen, und der zweite Schritt besteht darin, die Filets hinzuzufügen und zu zerhacken, um einerseits die Bildung von groben Stücken auf der Basis von Filet und andererseits die homogene Mischung der Gesamtheit der groben Stücke, die vom gehackten Fischfleisch und den Filets stammen, mit der Paste zu erhalten.

10. Verfahren nach einem der Ansprüche 6 bis 9, dadurch gekennzeichnet, daß das Formen durchgeführt wird, indem die homogene Mischung in einen Darm geschoben wird, so daß die in ihrem Darm eingeschlossene, wieder gefrorene Zubereitung in Portionen zerschnitten werden kann.

11. Verfahren nach Anspruch 6, dadurch gekennzeichnet, daß als Rohstoff außer den Blöcken von gefrorenem oder tiefgekühltem Fischfleisch frisches Fischfleisch verwendet wird, und daß während des einen oder des anderen Vorgangs, in dem das frische Fischfleisch verwendet wird, d.h. Feinhacken, Grobhacken und Einarbeiten, die Temperatur in einem Bereich zwischen -10°C und -2°C gehalten wird, insbesondere unter Hinzufügung von Trockeneis.
